**Europäisches Patentamt**

**European Patent Office**

**Office européen des brevets**

(11) Veröffentlichungsnummer: **0 040 169
B1**

## EUROPÄISCHE PATENTSCHRIFT

(45) Veröffentlichungstag der Patentschrift:
17.08.83

(51) Int. Cl.³: **B 29 H 5/28,** B 29 F 3/08

(21) Anmeldenummer: **81730045.2**

(22) Anmeldetag: **23.04.81**

(54) Vorrichtung zum kontinuierlichen Vulkanisieren bzw. Vernetzen der Isolierungen elektrischer Leiter oder Kabel.

(30) Priorität: **12.05.80 DE 3018461**

(43) Veröffentlichungstag der Anmeldung:
**18.11.81 Patentblatt 81/46**

(45) Bekanntmachung des Hinweises auf die Patenterteilung:
**17.08.83 Patentblatt 83/33**

(84) Benannte Vertragsstaaten:
**FR GB IT**

(56) Entgegenhaltungen:
**DE-A-1 779 425
DE-A-2 233 884
DE-A-2 906 173
US-A-2 343 893
US-A-3 635 621**

(73) Patentinhaber: **SIEMENS AKTIENGESELLSCHAFT,
Berlin und München Wittelsbacherplatz 2,
D-8000 München 2 (DE)**

(72) Erfinder: **Przybylski, Gerhard, Ing. grad.,
Siemensstrasse 26, D-8632 Neustadt (DE)**
Erfinder: **Schubert, Herbert, Ing. grad., Nussleite 7,
D-8633 Rödental (DE)**
Erfinder: **Waschkeit, Günter, Ing. grad.,
Sudetenstrasse 13, D-8632 Neustadt (DE)**
Erfinder: **Weber, Dietmar, Dipl.-Ing., Brunnersleiten 12,
D-8630 Coburg (DE)**

BUNDESDRUCKEREI BERLIN

### Vorrichtung zum kontinuierlichen Vulkanisieren bzw. Vernetzen der Isolierungen elektrischer Leitungen oder Kabel

Die Erfindung bezieht sich auf eine Vorrichtung zum kontinuierlichen Vulkanisieren bzw. Vernetzen der Isolierungen elektrischer Leitungen oder Kabel gemäß dem ersten Teil des Anspruchs 1.

Eine derartige Vorrichtung ist durch die US-A-2 343 893 bekannt. Bei dieser bekannten Vorrichtung wird der Sattdampf nur zur Heizung des die Vulkanisation bewirkenden Heißdampfes benutzt.

Es ist ferner bekannt, gesättigten Dampf als Wärmeübertragungsmittel zur Vulkanisation oder Vernetzung von mit Kautschuk oder Kunststoffen überzogenen elektrischen Leitern oder Kabeln zu verwenden. Bei diesem Verfahren muß der Druck über 15 bar liegen, wenn die Temperatur etwa 200°C erreichen soll (DE-AS 1 665 959).

Um einen so hohen Druck wie 15 bar aufrechtzuerhalten, ist eine relativ teure und umfangreiche Vorrichtung erforderlich. Andererseits ist dieser Druck aber viel höher als notwendig, um eine Bläschenbildung während des Vernetzens bzw. Vulkanisierens in der Isolation zu verhindern. Dies ist ein nicht vermeidbarer Nachteil bei der Verwendung von gesättigtem Dampf.

Nach dem in der DE-A-2 233 884 beschriebenen Verfahren ist es auch bekannt, überhitzten Dampf (Heißdampf) zu verwenden und mittels eines Gebläses entgegen der Bewegungsrichtung des zu vulkanisierenden bzw. zu vernetzenden Gutes zu bewegen. Schließlich ist aus der GB-A-1 486 957 generell bei Vulkanisationsanlagen bekannt, den Wärmeträger auch in Richtung des zu vulkanisierenden Gutes (Mitstromverfahren) zu führen.

Der Erfindung liegt die Aufgabe zugrunde, die für das Vulkanisieren bzw. Vernetzen der Isolierungen elektrischer Leitungen oder Kabel erforderliche Anlage so auszubilden, daß sie sowohl mit Naß- als auch mit Heißdampf betrieben werden kann. Diese Aufgabe wird durch die kennzeichnenden Merkmale des Anspruchs 1 gelöst.

Auf diese Weise kann man die Anlage ohne größeren Aufwand wahlweise mit Sattdampf oder überhitztem Dampf betreiben.

Weitere vorteilhafte konstruktive Ausgestaltungen der Erfindung bestehen darin, daß am Anfang und Ende des dampfführenden Teils des CV-Rohres dafür gesorgt wird, daß keine erheblichen Wärmeverluste auftreten. Zu diesem Zweck wird das Mundstück des Spritzkopfes des Extruders an seiner dem CV-Rohr zugewendeten Seite mit einer Wärmedämmung versehen.

Außerdem ist es vorteilhaft, an der Übergangsstelle vom dampfführenden Teil des CV-Rohres zur Kühlstrecke eine Dampfsperre anzuordnen. Sie kann auf verschiedene Weise bewirkt werden. Beispielsweise kann sie aus einer Anzahl von Streifen aus wärmedämmendem Material bestehen, die an der Oberseite des CV-Rohres schwenkbar angelenkt sind. Unter der Last des eigenen Gewichtes legen sie sich dicht an die hindurchgeführte Leitung und verhindern so den Übertritt des Dampfes in die Kühlstrecke.

Die Dampfsperre kann aber auch als Lamellendichtung ausgebildet sein, die mit einer Gasvorlage beaufschlagt wird. Eine andere Möglichkeit besteht darin, daß sie von einer Anzahl von elastischen Dichtungsscheiben gebildet wird, die die hindurchgeführte Leitung eng umschließen. Die Wirkung der Dichtungsscheiben kann noch dadurch verstärkt werden, daß sie ebenfalls mit einer Gasvorlage beaufschlagt werden.

Die Erfindung wird anhand der in der Zeichnung dargestellten und nachfolgend beschriebenen Ausführungsbeispiele im einzelnen erläutert. In der Zeichnung zeigt

Fig. 1 eine konventionelle CV-Anlage, die für die Anwendung von überhitztem Dampf nachgerüstet ist,

Fig. 2 eine Detaileinrichtung im Bereich des Extruders,

Fig. 3, 4, 5, 6 jeweils eine Detaileinrichtung an der Übergangsstelle CV-Rohr und Kühlstrecke.

Bei den konventionellen CV-Anlagen wird die aus dem Extruder 10 kommende, ummantelte Leitung 9 (bzw. Kabel) durch ein nach Art der Kettenlinie gekrümmtes Rohr 11 geführt, in dem die Leitung bzw. das Kabel in üblicher Weise mit Sattdampf über eine Leitung 13 beaufschlagt wird. Hinter einer Dampfregeliereinrichtung 14 und einer zur Kühlstrecke 12 führenden Leitung 15 wird über ein Ventil 16 Sattdampf in einen Dampferhitzer 20 geleitet, dem ein Gebläse 21 vorgeschaltet ist. Mit Hilfe des Gebläses kann der überhitzte Dampf so in schnelle Bewegung versetzt werden, daß eine turbulente Strömung (mit $Re \geq 10^3$) entsteht, die einen ausreichenden Wärmeübergang sicherstellt. Über die Leitung 22 kann das CV-Rohr 11 auch mit überhitztem Dampf beaufschlagt werden. Mit Hilfe der Ventile 16, 17 und 23 kann die CV-Anlage auf diese Weise sowohl mit Sattdampf als auch mit überhitztem Dampf betrieben werden. Eine Verbindungsleitung 17 mit einem Ventil 18 dient zum Fluten des CV-Rohres, wenn der Vulkanisationsprozeß beendet werden soll.

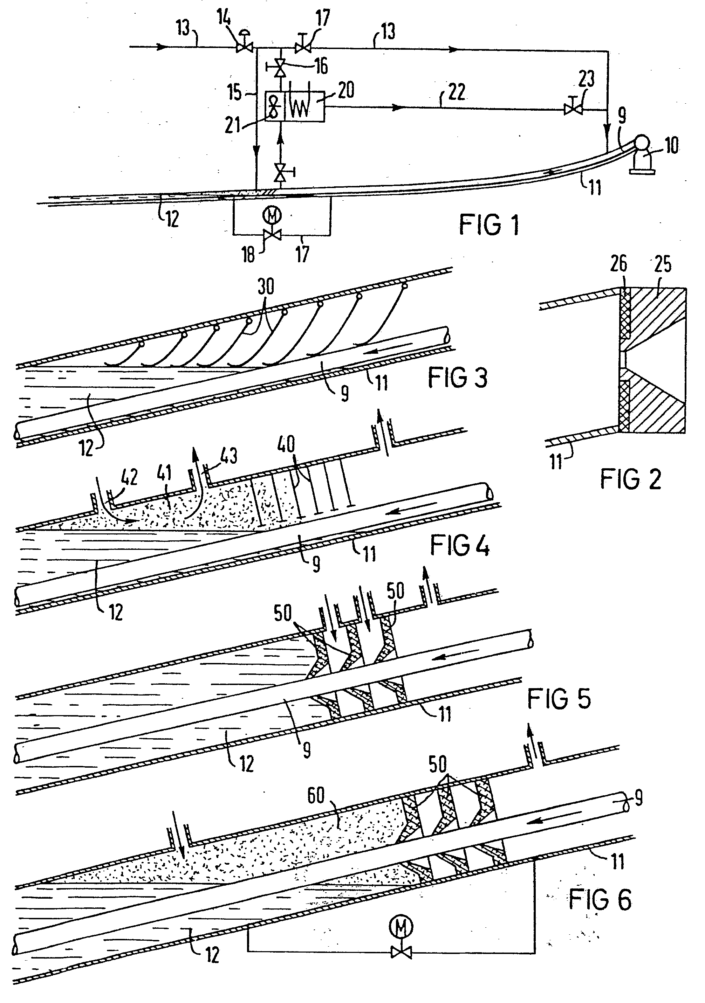

Um Wärmeverluste bei der Verwendung von überhitztem Dampf zu vermeiden, werden die Übergangsstelle Extruder—CV-Rohr und CV-Rohr—Kühlstrecke mit guten Wärmedämmungen versehen. Fig. 2 zeigt ein Mundstück 25 des Spritzkopfes des Extruders 10, das an seiner dem CV-Rohr zugewendeten Seite mit einer Wärmedämmschicht 26 belegt ist.

In den Fig. 3 bis 6 sind Ausführungsbeispiele für eine Wärmedämmung an der Übergangsstelle Dampfraum—Kühlstrecke dargestellt.

In Fig. 3 sind im Übergangsbereich zwischen dem CV-Rohr 11 und der Kühlstrecke 12 eine Anzahl von Streifen 30 aus wärmedämmendem Material angeordnet, die an der Oberseite des CV-Rohres schwenkbar angelenkt sind, so daß sie sich unter der Last des Eigengewichtes dicht auf die hindurchgeführte Leitung 9 legen können.

In Fig. 4 dient als Wärmesperre eine Lamellendichtung 40 mit einer nachgeschalteten Gasvorlage 41. Dabei wird das Gas über Ein- und Austrittsstutzen 42 und 43 dem CV-Rohr 11 zugeführt. Als Gas kann z. B. Preßluft verwendet werden.

Bei der Ausführungsform nach Fig. 5 dient eine Anzahl von elastischen Dichtungsscheiben 50 als Wärmesperre. Ihre Wirkung kann noch dadurch verstärkt werden, daß sie mit einer Gasvorlage 60 beaufschlagt werden, wie es in Fig. 6 dargestellt ist.

## Patentansprüche

1. Vorrichtung zum kontinuierlichen Vulkanisieren bzw. Vernetzen der Isolierungen elektrischer Leitungen oder Kabel mit Hilfe von Dampf, wobei das Kabel oder die Leitung durch ein Rohr hindurchgeführt wird, das u. a. mit überhitztem Dampf mit geringem Druck beaufschlagt wird, und wobei die mit Sattdampf arbeitende CV-Anlage mit einem zur Sattdampfversorgung parallelen Leitungszug versehen ist, in dessen Verlauf ein Dampf erhitzt und ein Gebläse angeordnet sind, dadurch gekennzeichnet, daß im Zuge der dampfführenden Leitungen (13 und 22) Ventile (16, 17 und 23) derart angeordnet sind, daß wahlweise Sattdampf oder überhitzter Dampf dem CV-Rohr (11) zugeleitet werden kann, wobei der Dampf im Mitstromverfahren an der zu vulkanisierenden oder zu vernetzenden Isolierung entlanggeführt wird.

2. Vorrichtung nach Anspruch 1, dadurch gekennzeichnet, daß das Mundstück (25) des Spritzkopfes des Extruders (10) an seiner dem CV-Rohr (11) zugewendeten Seite mit einer Wärmedämmung (26) versehen ist.

3. Vorrichtung nach Anspruch 1 oder 2, dadurch gekennzeichnet, daß an der Übergangsstelle vom dampfführenden Teil des CV-Rohres (11) zur Kühlstrecke (12) eine Dampfsperre (30, 40, 41, 50, 60) angeordnet ist.

4. Vorrichtung nach Anspruch 3, dadurch gekennzeichnet, daß die Dampfsperre aus einer Anzahl von Streifen (30) aus wärmedämmendem Material besteht, die an der Oberseite des CV-Rohres (11) schwenkbar angelenkt sind.

5. Vorrichtung nach Anspruch 3, dadurch gekennzeichnet, daß die Dampfsperre als Lamellendichtung (40) ausgebildet ist, die mit einer Gasvorlage (41) beaufschlagt ist.

6. Vorrichtung nach Anspruch 3, dadurch gekennzeichnet, daß die Dampfsperre aus einer Anzahl elastischer Dichtungsscheiben (50) besteht.

7. Vorrichtung nach Anspruch 6, dadurch gekennzeichnet, daß die elastischen Dichtungsscheiben (50) mit einer Gasvorlage (60) beaufschlagt sind.

## Claims

1. Apparatus for continuously vulcanizing or cross-linking, the insulation of electrical conductors or cables by means of steam, in which the cable or the conductor is passed through a pipe which inter alia is supplied with superheated steam at a low pressure, and in which the CV-system operating using saturated steam is provided with a length of piping which is arranged parallel to the saturated steam supply unit, in the course of which steam is heated and a fan is arranged, characterised in that, in the length of the steam-carrying pipes (13 and 22), valves (16, 17 and 23) are arranged in such a way that saturated steam or superheated steam is optionally supplied to the CV-pipe (11), the steam being passed along the insulation which is to be vulcanized or cross-linked, in a co-current process.

2. Apparatus as claimed in Claim 1, characterised in that the mouth (25) of the injection head of the extruder (10) is provided with thermal insulation (26) on its side facing the CV-pipe (11).

3. Apparatus as claimed in Claim 1 or 2, characterised in that at the point of transition from the steam-carrying part of the CV-pipe (11) to the cooling section (12) a steam trap (30, 40, 41, 50, 60) is arranged.

4. Apparatus as claimed in Claim 3, characterised in that the steam trap consists of a number of strips (20) which are made of a heat-insulating material and which are swingingly hinged to the upper wall of the CV-pipe (11).

5. Apparatus as claimed in Claim 3, characterised in that the steam trap is designed as a lamellar seal (40) which is pressurised by means of a gas offtake (41).

6. Apparatus as claimed in Claim 3, characterised in that the steam trap consists of a number of elastic sealing washers (50).

7. Apparatus as claimed in Claim 6, characterised in that the elastic sealing washers (50) are pressurised by means of a gas offtake (60).

## Revendications

1. Dispositif pour vulcaniser et réticuler en continu les isolations de conducteurs et de câbles électriques à l'aide de vapeur, le câble ou le conducteur passant dans un tube qui est alimenté, entre autres, en vapeur surchauffée à basse pression, et l'installation de vulcanisation en continu fonctionnant à la vapeur saturée étant munie d'une canalisation en parallèle pour l'alimentation en vapeur sautrée sur le trajet de laquelle une vapeur est chauffée et une soufflante est disposée, caractérisé en ce que sur le trajet des conduits pour la vapeur (13 et 22) sont disposées des vannes (16, 17 et 23) de manière à pouvoir envoyer au choix de la vapeur saturée ou de la vapeur surchauffée dans le tube (11) de vulcanisation en continu, la vapeur étant, par un procédé par courant de même sens, guidée le long de l'isolation à vulcaniser ou à réticuler.

2. Dispositif suivant la revendication 1, caractérisé en ce que l'embouchure (25) de la tête de l'extrudeuse (10) est munie d'un calorifugeage (26) sur son côté dirigé vers le tube de vulcanisation en continu (11).

3. Dispositif suivant la revendication 1 ou 2, caractérisé en ce qu'un écran pour la vapeur (30, 40, 41, 50, 60) est disposé à l'endroit de transition de la partie guidant la vapeur du tube de vulcanisation en continu (11) à la zone de refroidissement (12).

4. Dispositif suivant la revendication 3, caractérisé en ce que l'écran pour la vapeur est constitué d'un certain nombre de bandes (30) en matière thermiquement isolante, qui sont articulées de manière à pouvoir pivoter à la partie supérieure du tube de vulcanisation en continu (11).

5. Dispositif suivant la revendication 3, caractérisé en ce que l'écran pour la vapeur est agencé en dispositif d'étanchéité à lamelles (40), qui est alimenté par une réserve de gaz (41).

6. Dispositif suivant la revendication 3, caractérisé en ce que l'écran pour la vapeur est constitué d'un certain nombre de disques élastiques d'étanchéité (50).

7. Dispositif suivant la revendication 6, caractérisé en ce que les disques élastiques d'étanchéité (50) sont alimentés par une réserve de gaz (60).

FIG 1

FIG 2

FIG 3

FIG 4

FIG 5

FIG 6